# EUROPEAN PATENT SPECIFICATION

(11) **EP 3 534 024 B1**
(45) Date of publication and mention of the grant of the patent: **23.02.2022**
(21) Application number: 17864023.1
(22) Date of filing: 12.10.2017
(51) Int. Cl.: F16C 33/20, F16C 17/10, F16C 27/06, B60G 15/06, F16C 33/10, F16C 17/18, F16C 33/74

(54) **SLIDING BEARING**
GLEITLAGER
PALIER LISSE

(30) Priority: 27.10.2016 JP 2016210766
(43) Date of publication of application: 04.09.2019
(73) Proprietor: Oiles Corporation, Tokyo 108-0075 (JP)
(72) Inventor: SEKINE, Toshihiko, Fujisawa-shi Kanagawa 252-0811 (JP); MORISHIGE, Kouichi, Fujisawa-shi Kanagawa 252-0811 (JP); IMAGAWA, Keisuke, Fujisawa-shi Kanagawa 252-0811 (JP)
(74) Representative: Strehl Schübel-Hopf & Partner
(86) International application number: PCT/JP2017/037081
(87) International publication number: WO 2018/079289

(56) References cited:
- EP-A1- 1 548 303
- WO-A1-2004/031601
- DE-A1- 10 303 981
- GB-A- 1 101 928
- JP-A- H08 159 160
- JP-A- 2008 175 349

## Description

### Technical Field

The present invention relates to a slide bearing for supporting a load of an object of support, and in particular relates to a slide bearing for supporting a load on a shaft member while allowing a rotational motion of the shaft member.

### Background Art

A strut type suspension (McPherson strut) to be used for a front wheel of an automobile has a structure in which a coil spring is combined with a strut assembly having a piston rod and a hydraulic shock absorber, and the strut assembly rotates together with the coil spring in response to an operation of a steering. Accordingly, to allow a smooth rotation of the strut assembly, a bearing is usually installed between an upper mount that is provided as a mounting mechanism for mounting the strut assembly onto a vehicle body and an upper spring seat that is provided as a spring seat for an upper end of the coil spring.

For example, the Patent Literature 1 discloses a synthetic resin slide bearing as a bearing for the strut type suspension. This slide bearing has the follows: a synthetic resin upper case to be attached to the upper mount, a synthetic resin lower case to be attached to an upper spring seat so as to be rotatably combined with the upper case; and a synthetic resin annular center plate interposed between the upper case and the lower case for a smooth rotational motion between the upper case and the lower case.

Here, the center plate is a ring member with L-shape in radial cross-section, and has an annular portion with a thrust bearing surface formed on a front side and a hollow cylindrical portion with a radial bearing surface formed on an inner surface so as to connect to an inner circumferential edge part of a back side of the annular portion. The upper case includes an annular thrust load transmission surface slidable over the thrust bearing surface formed on the front side of the annular portion of the center plate and a cylindrical radial load transmission surface slidable over the radial bearing surface formed on the inner surface of the hollow cylindrical portion of the center plate.

For the slide bearing with the above structure, a thrust load applied to the strut type suspension is to be supported on the thrust bearing surface formed on the front side of the annular portion of the center plate via the thrust load transmission surface of the upper case, whereas a radial load applied to the strut type suspension is to be supported on the radial bearing surface formed on the inner surface of the hollow cylindrical portion of the center plate via the radial load transmission surface of the upper case.

### Citation List

### Patent Literature

Patent Literature 1: Japanese Unexamined Patent Application Laid-Open No. 2012-172814

A slide bearing with the features in the pre-characterizing portion of Claim 1 is disclosed in JP 2008 175349 A. A further slide bearing related to the one of the present invention is disclosed in EP 1 548 303 A1.

### Summary of Invention

### Technical Problem

The slide bearing described in the Patent Literature 1, dimensional tolerances are assigned to the upper case, the lower case, and the center plate so as to ensure combining these parts. Therefore, combining these parts to assemble the slide bearing results in a clearance between the radial load transmission surface of the upper case and the radial bearing surface formed on the inner surface of the hollow cylindrical portion of the center plate. A radial backlash generated in the slide bearing may consequently causes an uncomfortable feeling in a steering operation when this slide bearing is incorporated into the strut type suspension.

The present invention has been made in view of the above situation, and an object of the invention is to provide a slide bearing capable of preventing a backlash in a radial direction.

### Solution to Problem

In response to the above issue, for a slide bearing of the present invention, a bearing surface of a center plate in an annular shape, and a load transmission surface formed on one of an upper case and a lower case so as to face the bearing surface of the center plate, each are shaped in a substantial conical surface, so that thrust and radial loads applied to the upper case, are supported on the common bearing surface via the common load transmission surface. Moreover, a lubricating sheet having a slide surface in shape of a substantial conical surface is placed between the bearing surface of the center plate and the load transmission surface of one of the upper case and the lower case.

The slide bearing of the present invention is defined in Claim 1. Further advantageous features are set out in the dependent claims.

Here, the slide bearing may be capable of supporting a load of a vehicle body applied to a strut type suspension while allowing a rotational motion of a strut assembly of the strut type suspension. Such slide bearing may be as follows:
the upper case, the lower case, the center plate, and the lubricating sheet, each include an insertion hole for the strut assembly;
the upper case is configured to be attached to a mounting mechanism for mounting the strut assembly onto the vehicle body, with the strut assembly inserted thereinto; and the lower case is configured to be attached to a spring seat at a top of a coil spring incorporated into the strut assembly, with the strut assembly inserted thereinto.

### Advantageous Effects of Invention

According to the present invention, the bearing surface of the center plate, and the load transmission surface of the upper case or the lower case, each are shaped in a substantial conical surface, thus thrust and radial loads applied to the upper case are supported on the common bearing surface via the common load transmission surface. Therefore, when the bearing surface and the load transmission surface are in contact with each other in order to support thrust and radial loads applied to the upper case, no clearance in a radial direction generates between the bearing surface and the load transmission surface. This prevents generation of a radial backlash in the slide bearing. Moreover, according to the present invention, the lubricating sheet placed between the bearing surface of the center plate and the load transmission surface of the upper case or the lower case results in a smooth relative rotational motion between the upper case and the lower case even with a load applied from the object of support.

### Brief Description of Drawings

[Fig 1] Figs. 1 (A), 1 (B) and 1 (C) are respectively a front view, a back view, and a side view, of a slide bearing 1 according to one embodiment of the present invention, and Fig. 1 (D) is an A-A cross-sectional view of the slide bearing 1 illustrated in Fig. 1 (A);
[Fig. 2] Fig. 2(A) is an enlarged view of the part A of the slide bearing 1 illustrated in Fig. 1(D), and Fig. 2(B) is an enlarged view of the part B of the slide bearing 1 illustrated in Fig. 1(D);
[Fig. 3] Figs. 3(A), 3(B), and 3(C) are respectively a front view, a back view, and a side view, of an upper case 2, and Fig. 3(D) is a B-B cross-sectional view of the upper case 2 illustrated in Fig. 3(A);
[Fig. 4] Figs. 4(A), 4(B), and 4(C) are respectively a front view, a back view, and a side view, of a lower case 3, and Fig. 4(D) is a C-C cross-sectional view of the lower case 3 illustrated in Fig. 4(A);
[Fig. 5] Figs. 5(A), 5(B), and 5(C) are respectively a front view, a back view, and a side view, of a center plate 4, Fig. 5(D) is a D-D cross-sectional view of the center plate 4 illustrated in Fig. 5(A), and Fig. 5(E) is an enlarged view of the part C of the center plate 4 illustrated in Fig. 5(A);
[Fig. 6] Figs. 6(A), 6(B), and 6(C) are respectively a front view, a back view, and a side view, of a lubricating sheet 6, and
Fig. 6(D) is an E-E cross-sectional view of the lubricating sheet 6 illustrated in Fig. 6(A); and
[Fig. 7] Fig. 7(A) is a view equivalent to Fig. 2 (A), for a modification 1A of the slide bearing 1 according to the embodiment of the present invention, and Fig. 7(B) is a view equivalent to Fig. 2(B), for the modification 1A of the slide bearing 1 according to the embodiment of the present invention.

### Description of Embodiments

In the following, one embodiment of the present invention will be described.

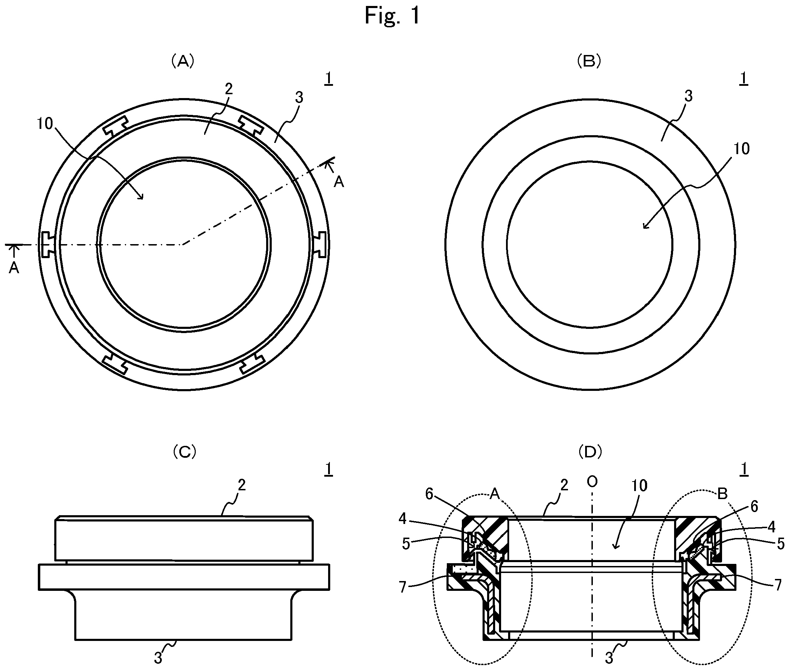

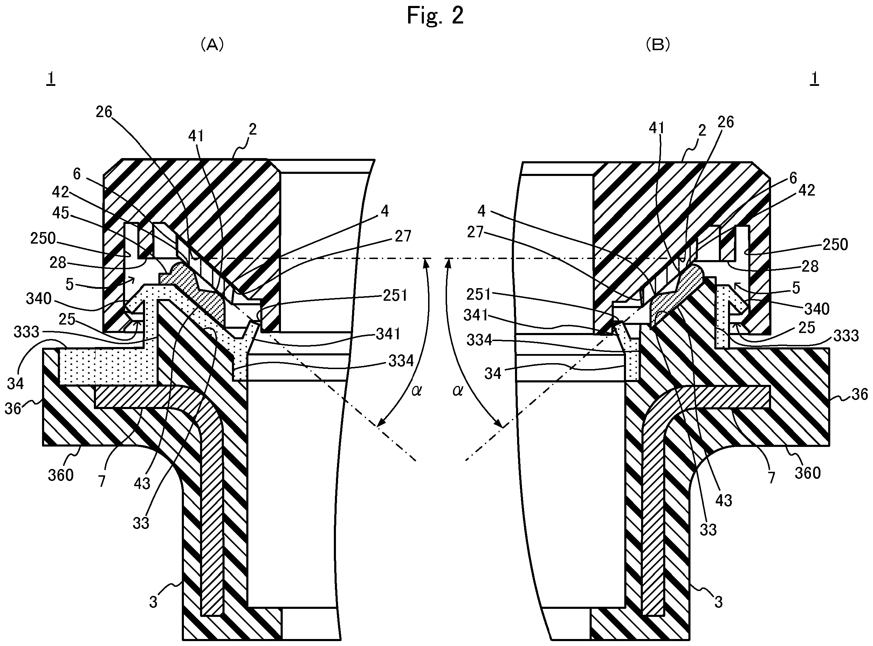

Figs. 1 (A), 1 (B) and 1 (C) are respectively a front view, a back view, and a side view, of a slide bearing 1 according to the present embodiment, and Fig. 1 (D) is an A-A cross-sectional view of the slide bearing 1 illustrated in Fig. 1 (A). Fig. 2(A) is an enlarged view of the part A of the slide bearing 1 illustrated in Fig. 1(D), and Fig. 2(B) is an enlarged view of the part B of the slide bearing 1 illustrated in Fig. 1(D).

The slide bearing 1 according the embodiment, includes a receiving hole 10 for receiving a strut assembly (not illustrated) of a strut type suspension and is capable of supporting a load on the strut type suspension while allowing a rotational motion of the strut assembly received in this receiving hole 10. As illustrated in the figures, the slide bearing 1 has the following: an upper case 2; a lower case 3 rotatably combined with the upper case 2 so as to form an annular space 5 between the lower case 3 and the upper case 2; a center plate 4 in an annular shape, placed in this annular space 5; a lubricating sheet 6 placed between the upper case 2 and the center plate 4; and lubricating grease, although not illustrated, filled in the annular space 5.

The upper case 2 is made of thermoplastic resin excellent in sliding properties, such as a polyacetal resin impregnated with a lubricating oil as necessary, and is to be attached to an upper mount (not illustrated), with the strut assembly of the strut type suspension inserted thereinto.

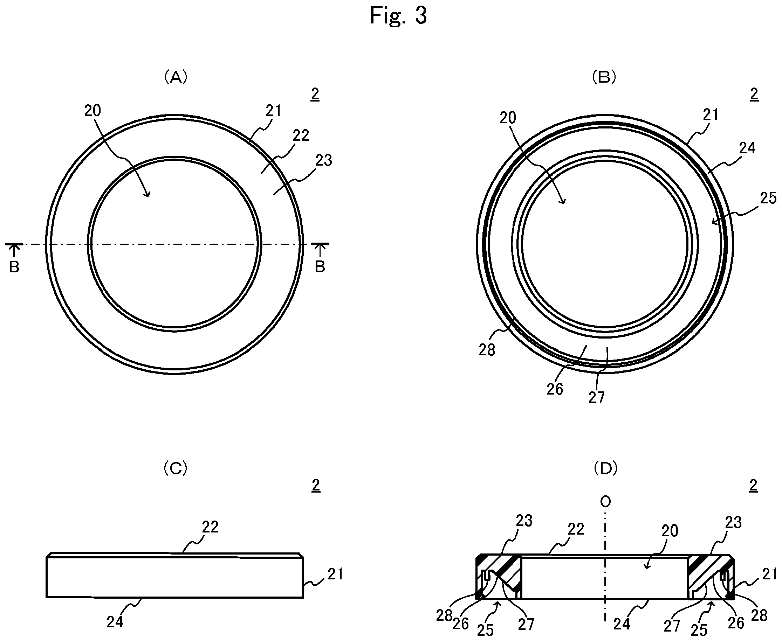

Figs. 3(A), 3(B), and 3(C) are respectively a front view, a back view, and a side view, of the upper case 2, and Fig. 3(D) is a B-B cross-sectional view of the upper case 2 illustrated in Fig. 3(A).

As illustrated in the figures, the upper case 2 has the following: an upper case body 21 annularly shaped including an insertion hole 20 for inserting the strut assembly; an attachment surface 23 formed in an upper surface 22 of the upper case body 21 so as to attach the slide bearing 1 to the upper mount; an annular groove 25 formed on a lower surface 24 of the upper case body 21 to open on the lower surface 24 and to close on the upper surface 22 side, and rotatably combined with the lower case 3 to form the annular space 5.

A groove bottom 26 of the annular groove 25 is shaped like a conical surface of a cone whose centerline lies on an axis O of the insertion hole 20 and whose base and apex respectively are situated closer to the upper surface 22 and the lower surface 24 of the upper case body 21. A load transmission surface 27 is formed on this groove bottom 26 so as to face an after-mentioned bearing surface 42 of the center plate 4 with the lubricating sheet 6 interposed therebetween.

In the groove bottom 26 of the annular groove 25, an annular protrusion 28 protruding from the groove bottom 26 toward the lower surface 24 of the upper case body 21 is formed on an outer circumferential side of the load transmission surface 27. This annular protrusion 28 surrounds the center plate 4 placed on the annular groove 25 and prevents the lubricating grease supplied on a bearing surface 42 of the center plate 4 from being push radially outwardly out of the bearing surface 42 of the center plate 4 when a load is applied to the strut type suspension.

The lower case 3 is an insert-molded product having a structure where a steel plate 7 as reinforcement is embedded inside a resin molding of thermoplastic resin, such as polyamide resin, as necessary. The lower case 3 is capable of, with the strut assembly of the strut type suspension inserted therein, supporting a top end of a coil spring (not illustrated) of the strut type suspension

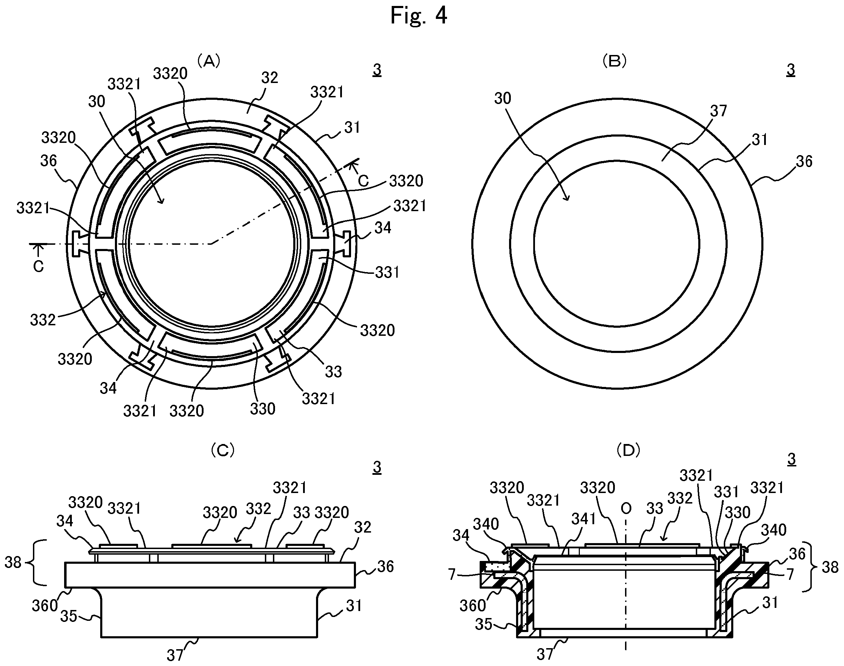

Figs. 4(A), 4(B), and 4(C) are respectively a front view, a back view, and a side view, of the lower case 3, and Fig. 4(D) is a C-C cross-sectional view of the lower case 3 illustrated in Fig. 4(A).

As illustrated in the figures, the lower case 3 has the follows: a lower case body 31 in a substantial hollow cylindrical shape, including an insertion hole 30 for insertion of the strut assembly; a flange 36 formed on an upper end portion 38 of the lower case body 31 so as to project radially outwardly from an outer peripheral surface 35 of the lower case body 31; an annular protrusion 33 formed on an upper surface 32 of the flange 36 so as to protrude toward the upper case 2, enabling to be inserted into the annular groove 25 formed on the lower surface 24 of the upper case body 21 of the upper case 2 to form the annular space 5 when the lower case 3 is rotatably combined with the upper case 2; and a dust seal 34 attached to the protrusion 33 and made of elastic material, such as urethane resin.

A lower surface 360 of the flange 36, with the strut assembly of the strut type suspension inserted thereinto, is to be fitted with an upper spring seat (not illustrated) that is a spring seat at the top end of the coil spring (not illustrated) of the strut type suspension.

Formed is a supporting surface 331 for setting the center plate 4, in an upper surface 330 of the annular protrusion 33. In the present embodiment, the supporting surface 331 is shaped like a conical surface of a cone whose centerline lies on an axis O of the insertion hole 30 and whose base and apex respectively are situated closer to the upper end portion 38 and a lower surface 37 of the lower case body 31; however, the supporting surface 331 may be have any shape, so long as it is conformed to a shape of the center plate 4 and allows placement of the center plate 4 thereon.

Annularly formed are detents 332 for preventing a rotation of the center plate 4 placed on the supporting surface 331, on an outer circumferential side of the supporting surface 331. The detents 332 each have flat sections 3321 and protruding sections 3320 protruding from the flat sections 3321 toward the upper case 2, and the flat sections 3321 and the protruding sections 3320 are alternately placed.

The dust seal 34 is used to prevent intrusion of external foreign matters, such as dust, into the annular space 5, and has a lip 340 and a lip 341 as illustrated in Fig. 2(A) and Fig. 2(B). Insertion of the protrusion 33 of the lower case 3 into the annular groove 25 formed on the lower surface 24 of the upper case body 21 of the upper case 2, causes the lip 340 to fill up a gap between an outer peripheral surface 333 of the protrusion 33 and an outer circumferential side inner-wall 250 of the annular groove 25 and the lip 341 to fill up a gap between an inner peripheral surface 334 of the protrusion 33 and an inner circumferential side inner-wall 251 of the annular groove 25.

The center plate 4 is made of material, including thermoplastic elastomer, such as polyolefin based thermoplastic elastomer in which lubricant, such as PTFE (polytetrafluoroethylene), lubricating oil, and silicone, is added as necessary, polyester based thermoplastic elastomer, polyurethane based thermoplastic elastomer, polyamide based thermoplastic elastomer, and polystyrene based thermoplastic elastomer; thermoplastic plastic, such as polyethylene resin, polyamide resin, and plasticized polybutylene terephthalate resin; and elastic material excellent in sliding properties, such as nitrile rubber and other synthetic rubber. The center plate 4 is fixed on the supporting surface 331 of the annular protrusion 33 formed on the upper surface 32 of the flange 36 of the lower case 3, and faces the load transmission surface 27 of the annular groove 25 formed on the lower surface 24 of the upper case body 21 of the upper case 2, with the interposition of the lubricating sheet 6. Consequently, the center plate 4 is to cooperate with the lubricating sheet 6, thus supporting a load of a vehicle body applied to the strut type suspension and transmitted to the upper case 2 while allowing a free rotational motion between the upper case 2 and the lower case 3.

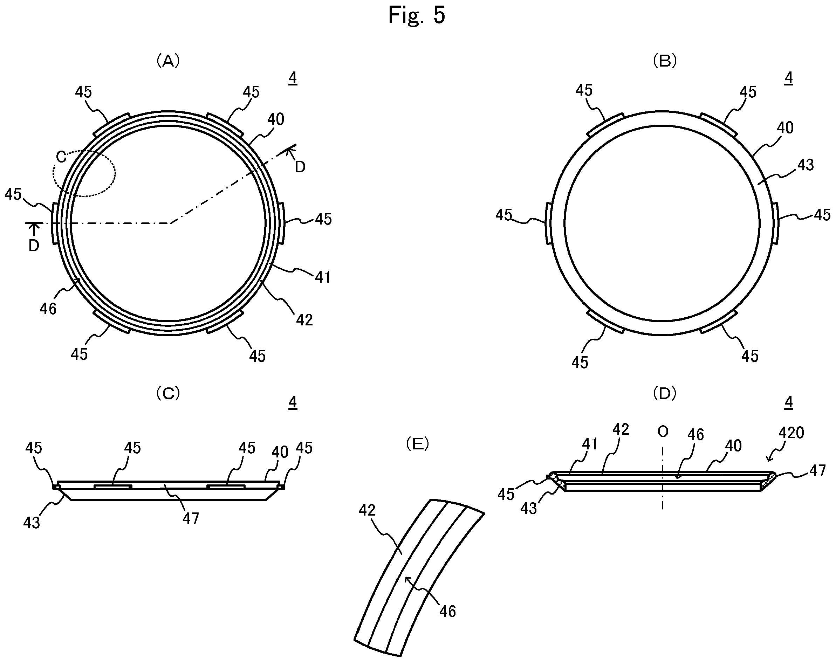

Figs. 5(A), 5(B), and 5(C) are respectively a front view, a back view, and a side view, of the center plate 4, Fig. 5(D) is a D-D cross-sectional view of the center plate 4 illustrated in Fig. 5(A), and Fig. 5(E) is an enlarged view of the part C of the center plate 4 illustrated in Fig. 5(A).

As illustrated in the figures, the center plate 4 has a center plate body 40 in annular shape configured to be inserted into the groove bottom 26 formed like conical surface, of the annular groove 25 of the upper case 2; and a plurality of convex detents 45 projecting radially outwardly from an outer peripheral surface 47 of the center plate body 40

An upper surface 41 and a lower surface 43 of the center plate body 40 each are shaped like a conical surface of a cone whose centerline lies on the axis O and whose base and apex respectively are situated closer to the upper case 2 and the lower case 3. The upper surface 41 is provided with the bearing surface 42 facing, with the interposition of the lubricating sheet 6, the load transmission surface 27 formed on the groove bottom 26 of the annular groove 25 of the upper case 2. The center plate body 40 may have a folded-back rim on the inner circumferential side.

When the center plate 4 is placed on the lower case 3 so that the lower surface 43 of the center plate body 40 contacts with the supporting surface 331 of the annular protrusion 33 formed on the upper surface 32 of the flange 36 of the lower case body 31 of the lower case 3, each of the detents 45 comes to be placed on the corresponding flat section 3321 of the detent 332 formed on the outer circumferential side of the supporting surface 331, thus engaging with the protruding sections 3320 located by each side of the flat section 3321 to prevent the center plate 4 from rotating relative to the lower case 3.

When the center plate 4 is placed on the lower case 3 so that the lower surface 43 of the center plate body 40 contacts with the supporting surface 331 of the annular protrusion 33 formed on the upper surface 32 of the flange 36 of the lower case body 31 of the lower case 3, the bearing surface 42 comes to face the load transmission surface 27 formed on the annular groove 25 of the upper case 2, across the lubricating sheet 6, and to be rotatable relative to this load transmission surface 27. An annular grease groove 46 formed on the bearing surface 42 to function as grease reservoir, enables more lubricating grease to be kept between the bearing surface 42 and the lubricating sheet 6, thus improving sliding properties between the bearing surface 42 and an after-mentioned slide surface 63 of the lubricating sheet 6.

The lubricating sheet 6 is made of thermoplastic plastic excellent in sliding properties, including a fluorine resin, such as PTFE and Modified PTFE obtained by copolymerization of TFE (tetrafluoroethylene) and a trace of other material (comonomers), polyacetal resin, polyethylene resin, polyamide resin, and polyphenylene sulfide resin; lubricant, including PTFE (with proviso that the case of using PTFE or Modified PTFE as thermoplastic plastic is excluded), lubricating oil, silicone, and graphite, and/or reinforcement, including aramid fibers, glass fibers, and carbon fibers, are added as necessary. The lubricating sheet 6 is a member in substantial ring shape and is placed between the load transmission surface 27 of the upper case 2 and the bearing surface 42 of the center plate 4. Thickness of the lubricating sheet 6 varies depending on the material used, and may be, for example, from 0.1mm to 1mm, preferably from 0.2mm to 0.7mm. Preferably, both of a front surface and a back surface of the lubricating sheet 6 may be flat.

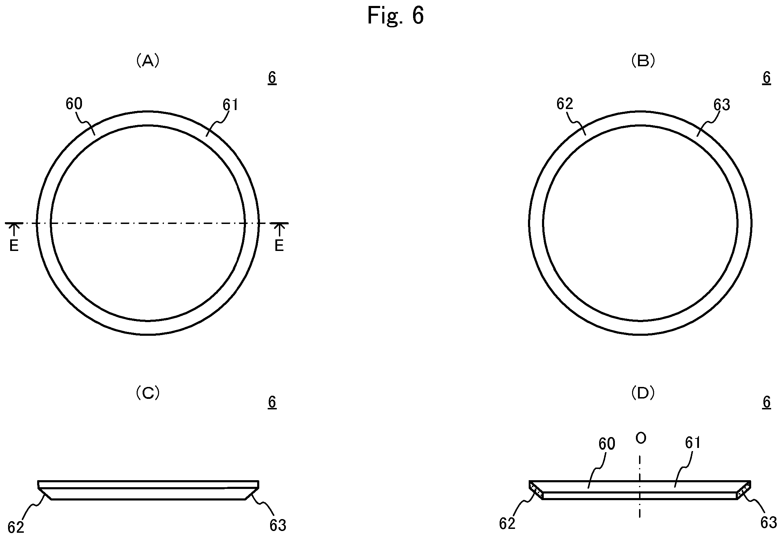

Figs. 6(A), 6(B), and 6(C) are respectively a front view, a back view, and a side view, of the lubricating sheet 6, and Fig. 6(D) is an E-E cross-sectional view of the lubricating sheet 6 illustrated in Fig. 6(A).

As illustrated in the figures, an upper surface 60 and a lower surface 62 of the lubricating sheet 6 each are shaped like conical surface of a cone whose centerline lies on the axis O and whose base and apex respectively are situated closer to the upper case 2 and the lower case 3; and respectively have a slide surface 61 formed on the upper surface 60 so as to slide over the load transmission surface 27 of the upper case 2 and a slide surface 63 formed on the lower surface 62 so as to slide over the bearing surface 42 of the center plate 4.

In the slide bearing 1 with the above structure, the center plate 4 is fixed on the supporting surface 331 of the annular protrusion 33 formed on the upper surface 32 of the flange 36 of the lower case 3, the bearing surface 42 of the center plate 4 is capable of sliding over the slide surface 63 of the lubricating sheet 6, and the load transmission surface 27 formed on the groove bottom 26 of the annular groove 25 of the upper case 2 is capable of sliding over the slide surface 61 of the lubricating sheet 6. This allows the upper case 2 and the lower case 3 to be combined rotatably relative to each other, with the lubricating sheet 6 and the center plate 4 in between.

Hereinabove, the embodiment of the present invention has been described.

According to the present embodiment, the bearing surface 42 of the center plate 4, the load transmission surface 27 of the upper case 2, and the slide surfaces 61, 63 of the lubricating sheet 6, each are shaped like conical surface, therefore each being arranged to be inclined with respect to a thrust direction (a direction of the axis 0 of the slide bearing 1 illustrated in Fig. 1(D)) and a radial direction of the strut type suspension. Therefore, according to the present embodiment, the thrust and radial loads applied to the strut type suspension are supported on the common bearing surface 42 via the common load transmission surface 27 while rotational motion of the strut assembly of the strut type suspension inserted into the receiving hole 10 is allowed.

In supporting the thrust and radial loads applied to the strut type suspension, on the common bearing surface 42 via the common load transmission surface 27 while allowing rotational motion of the strut assembly of the strut type suspension inserted into the receiving hole 10, an inclination angle α (See Fig. 2(A) and Fig. 2(B)) of each of the bearing surface 42 of the center plate 4, the load transmission surface 27 of the upper case 2, and the slide surfaces 61, 63 of the lubricating sheet 6, in respect to the radial direction, may preferably be set to fall within a range from 5 degrees to 40 degrees.

According to the present embodiment, the bearing surface 42 of the center plate 4, the load transmission surface 27 of the upper case 2, and the slide surfaces 61, 63 of the lubricating sheet 6, each are shaped like conical surface, therefore, no clearance in the radial direction generates between the bearing surface 42 and the load transmission surface 27 in state where, in order to supporting a load applied to the strut type suspension, the bearing surface 42 of the center plate 4 and the slide surface 63 of the lubricating sheet 6 are in contact with each other and where the load transmission surface 27 of the upper case 2 and the slide surface 61 of the lubricating sheet 6 are in contact with each other. This enables preventing the generation of a radial backlash in the slide bearing 1.

In the present embodiment, an elastic member is used as the center plate 4. Accordingly, its elastic deformation depending on the load of vehicle body applied to the strut type suspension, decreases a wedge effect occurring between the load transmission surface 27 of the upper case 2 and the bearing surface 42 of the center plate 4 with the lubricating sheet 6 in between. This prevents adhesion of the upper case 2 to the center plate 4 through the lubricating sheet 6.

In the present embodiment, the lubricating sheet 6 made of resin excellent in sliding properties, such as PTFE, is placed between the bearing surface 42 of the center plate 4 and the load transmission surface 27 of the upper case 2. This enables smooth rotational motion between the upper case and the lower case while the load of the vehicle body applied to the strut type suspension is supported.

According to the present embodiment, the grease groove 46 is provided on the bearing surface 42 of the center plate 4 so as to function as a lubricating grease reservoir, thereby holding more lubricating grease on the bearing surface 42. Therefore, it is achieved over a long period to support the load applied in the thrust direction of the strut type suspension while allowing smooth rotational motion of the strut assembly of the strut type suspension.

In the present embodiment, the groove bottom 26 of the annular groove 25 formed on the lower surface 24 of the upper case 2 is provided with the annular protrusion 28 protruding from the groove bottom 26 toward the lower case 3 so that the annular protrusion 28 surrounds the outer periphery of the center plate 4 placed in the annular space 5 resulting from combination of the upper case 2 and the lower case 3. This protrusion 28 prevents the lubricating grease filled in the annular space 5 from being forced radially outwardly out of on the bearing surface 42 of the center plate 4 upon the occurrence of applying the load to the strut type suspension. Consequently, the lubricating grease film can cover the bearing surface 42 more certainly, and therefore, it is achieved over a long period to support the load applied in the thrust direction of the strut type suspension while allowing smooth rotational motion of the strut assembly of the strut type suspension.

In the present embodiment, the center plate 4 made of elastic material has a substantial waved shape in cross-section in direction of the axis O. This can lead to elastically-deforminq the center plate 4 more largely and easily in comparison with if the center plate 4 is shaped flatly in cross-section in direction of the axis O. This can achieves further improvement of the sealing performance against the lubricating grease filled the grease groove 46 on the bearing surface 42 of the center plate 4, thus leading to a lubrication over a long period, of the slide surface 63 of the lubricating sheet 6 and the bearing surface 42 of the center plate 4 with the lubricating grease.

The present invention can include, but is not limited to, each of above embodiments; it will be obvious to those skilled in the art that various changes may be made within the scope of the appended claims.

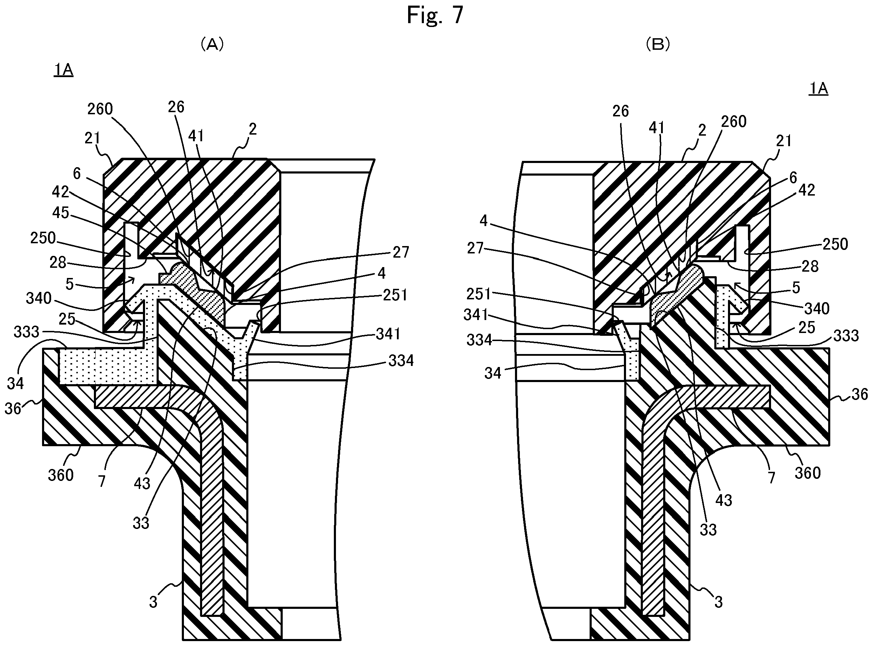

For example, as a modification 1A of the slide bearing 1 according the embodiment, illustrated in Fig. 7(A) and Fig. 7(B), an installation groove 260 for attaching the lubricating sheet 6 may be formed on the groove bottom 26 of the annular groove 25 of the upper case body 21, and the lubricating sheet 6 attached to this installation groove 260 may result in restricting radial motion of the lubricating sheet 6.

In the above embodiment, the center plate 4 is placed and fixed on the lower case 3; however, the center plate 4 may be rotatably placed relative to the lower case 3. Specifically, a bearing surface may be also formed on the lower surface 43 of the center plate 4 as on the upper surface 41 of the center plate 4, and this bearing surface may be made to be slidable over the supporting surface 331 of the protrusion 33 formed on the upper surface 32 of the flange 36 of the lower case body 31 of the lower case 3. For this case, a lubricating sheet may be also placed between the center plate 4 and the lower case 3, so that the bearing surface formed on the lower surface 43 of the center plate 4 may face the supporting surface 331 of the lower case 3 with the interposition of the lubricating sheet.

In the above embodiment, the bearing surface 42 of the center plate 4 and the load transmission surface 27 of the upper case 2 each are shaped like conical surface of a cone whose centerline lies on the axis O and whose base and apex respectively are situated closer to the upper case 2 and the lower case 3; the present invention can include, but is not limited to, this structure. The bearing surface 42 and the load transmission surface 27 each may be shaped like conical surface of a cone whose centerline lies on the axis 0 and whose base and apex respectively are situated closer to the lower case 3 and the upper case 2. For this case, the slide surfaces 61, 63 of the lubricating sheet 6 each may be also shaped like conical surface of a cone whose centerline lies on the axis 0 and whose base and apex respectively are situated closer to the lower case 3 and the upper case 2.

In the above embodiment, the attachment surface 23 formed on the upper surface 22 of the upper case body 21 of the upper case 2 is perpendicular to a strut axis of the strut type suspension; the present invention includes, but not limited to, this embodiment. An angle of the attachment surface 23 of the upper case 2 in respect to the strut axis of the strut type suspension may be conveniently determined depending to required performance for vehicle. For example, the attachment surface 23 of the upper case 2 may incline to the strut axis of the strut type suspension.

In the above embodiment, the lower surface 360 of the flange 36 of the lower case 3 is provided with the upper spring seat for supporting the upper end of the coil spring of the strut type suspension; however, the lower surface 360 of the flange 36 of the lower case 3 itself may act as the upper spring seat.

The present invention is widely applicable to slide bearing for supporting a load of an object of support, in particular, such slide bearing for supports a load on a shaft member while allowing a rotational motion of the shaft member in various mechanisms, including the strut type suspension.

### Reference Signs List

1, 1A: slide bearing, 2 : upper case, 3 : lower case, 4 : center plate, 5 : annular space, 6 : lubricating sheet, 7 : steel plate, 10: receiving hole of the slide bearing 1, 20 : insertion hole of the upper case 2, 21 : upper case body, 22 : upper surface of the upper case body, 23 : attachment surface of the upper case body 21, 24: lower surface of the upper case body 21, 25 : annular groove of the upper case body 21, 26: groove bottom of the annular groove 25, 27 : load transmission surface, 28 : annular protrusion of the annular groove 25, 30 : insertion hole of the lower case 3, 31 : lower case body, 32 : upper surface of the flange 36 of the lower case body 31, 33: annular protrusion of the lower case body 31, 34 : dust seal, 35 : outer peripheral surface of the lower case body 31, 36: flange of the lower case body 31, 37: lower surface of the lower case body 31, 38 : upper end portion of the lower case body 31, 40 : center plate body, 41: upper surface of the center plate body 40, 42 : bearing surface, 43 : lower surface of the center plate body 40, 45 : detent of the center plate body 40, 46 : recess of the bearing surface 42, 47 : outer peripheral surface of the center plate body 40, 60 : upper surface of the lubricating sheet 6, 61, 63 : slide surface, 62 : lower surface of the lubricating sheet 6, 250 : outer circumferential side inner-wall of the annular groove 25, 251 : inner circumferential side inner-wall of the annular groove 25, 260: installation groove, 330: upper surface of the annular protrusion 33, 331 : supporting surface of the lower case body 31, 332 : detent of the lower case body 31, 333 : outer peripheral surface of the annular protrusion 33, 334 : inner peripheral surface of the annular protrusion 33, 340, 341 : lip of the dust seal 34, 360 : lower surface of the flange 36, 3320: protruding section of the detent 332, 3321: flat section of the detent 332

## Claims

1. A slide bearing for supporting a load of an object of support, the slide bearing comprising:
an upper case (2) configured to receive the load of the object of support;
a lower case (3) rotatably combined with the upper case; and
a center plate (4) placed between the upper case and the lower case;
the center plate having an upper surface (41), on which a bearing surface (42) is formed, and lower surface (43), both of which are in a shape of a substantial conical surface, the bearing surface including a grease groove (46) to function as a grease reservoir;
the upper case having a load transmission surface (27) in a shape of substantial conical surface; and
the lower case having a supporting surface (331) in a shape of a substantial conical surface, the supporting surface being in contact with the lower surface of the center plate;
**characterized in that** the slide bearing further comprises
a lubricating sheet (6) placed between the center plate and the upper case, and having an upper surface (60) and a lower surface (62), both of which are in a shape of a substantial conical surface, a slide surface (63) formed on the lower surface of the lubricating sheet being in contact with the bearing surface of the center plate,
the load transmission surface being in contact with the upper surface of the lubricating sheet;
the lower case further having detents (332) annularly formed on an outer circumferential side of the supporting surface, the detents having flat sections (3321) and protruding sections (3320) protruding from the flat sections towards the upper case (2), the flat sections and the protruding sections being alternately placed;
the center plate further having convex detents (45) projecting radially outwardly from an outer peripheral surface (47) of the center plate; and
the convex detents of the center plate being configured to engage with the protruding sections of the detents of the lower case to prevent the center plate from rotating relative to the lower case.

2. A slide bearing according to Claim 1, wherein the center plate (4) is made of elastic material.

3. A slide bearing according to any one of Claims 1 - 2, wherein the lubricating sheet (6) is made of synthetic resin.

4. A slide bearing according to any one of Claims 1 to 3, wherein an inclination angle of each of the bearing surface (42), the load transmission surface (27), and the slide surface (63), in respect to radial direction, is set to be fall within a range from 5 degrees to 40 degrees.

5. A slide bearing according to any one of Claims 1 to 4, wherein:
the slide bearing is configured to support a load of a vehicle body applied to the strut type suspension while allowing rotational motion of a strut assembly of the strut type suspension;
the upper case (2), the lower case (3), the center plate (4), and the lubricating sheet (6), each include an insertion hole (20, 30) for insertion of the strut assembly;
the upper case is configured to be attached to a mounting mechanism for mounting the strut assembly onto the vehicle body, with the strut assembly inserted in the insertion holes; and
the lower case is configured to be attached to a spring seat at a top of a coil spring incorporated into the strut assembly, with the strut assembly inserted in the insertion holes.

## Patentansprüche

1. Gleitlager zum Halten einer Last eines Halteobjekts, wobei das Gleitlager umfasst:
ein oberes Gehäuse (2), das dazu eingerichtet ist, die Last des Halteobjekts zu empfangen;
ein unteres Gehäuse (3), das mit dem oberen Gehäuse rotierend kombiniert ist; und
eine Mittelplatte (4), die zwischen das obere und das untere Gehäuse platziert ist;
wobei die Mittelplatte eine obere Fläche (41), auf der eine Tragefläche (42) ausgebildet ist, und eine untere Fläche (43) aufweist, von denen beide die Form einer im Wesentlichen konischen Oberfläche aufweisen, wobei die Gleitoberfläche eine Schmiernut (46) enthält, die als ein Schmiermittelreservoir fungiert;
wobei das obere Gehäuse eine Lastübertragungsfläche (27) in Form einer im Wesentlichen konischen Oberfläche aufweist; und
das untere Gehäuse eine Halteoberfläche (331) in Form einer im Wesentlichen konischen Oberfläche aufweist, wobei die Halteoberfläche in Kontakt mit der unteren Fläche der Mittelplatte steht;
**gekennzeichnet dadurch, dass** das Gleitlager ferner umfasst:
eine Schmierlage (6), die zwischen der Mittelplatte und dem oberen Gehäuse platziert ist und eine obere Fläche (60) und eine untere Fläche (62) aufweist, von denen beide die Form einer im Wesentlichen konischen Oberfläche haben, wobei eine Gleitoberfläche (63) auf der unteren Fläche der Schmierlage, die in Kontakt mit der Tragefläche der Mittelplatte steht, ausgebildet ist,
wobei die Lastübertragungsfläche in Kontakt mit der oberen Fläche der Schmierlage steht;
wobei das untere Gehäuse ferner Sperrelemente (332) aufweist, die auf einer Außenumfangsseite der Halteoberfläche ringförmig ausgebildet sind, wobei die Sperrelemente flache Abschnitte (3321) und hervorragende Abschnitte (3320), die aus den flachen Abschnitten zum oberen Gehäuse (2) hin hervorragen, aufweisen, wobei die flachen Abschnitte und die hervorragenden Abschnitte alternierend angeordnet sind;
wobei die Mittelplatte ferner konvexe Sperrelemente (45) aufweist, die aus einer Außenumfangsoberfläche (47) der Mittelplatte radial nach außen herausragen; und
die konvexen Sperrelemente der Mittelplatte dazu eingerichtet sind, mit den hervorragenden Abschnitten der Sperrelemente des unteren Gehäuses in Eingriff zu gelangen, um die Mittelplatte daran zu hindern, relativ zum unteren Gehäuse zu rotieren.

2. Gleitlager nach Anspruch 1, wobei die Mittelplatte (4) aus elastischem Material hergestellt ist.

3. Gleitlager nach einem der Ansprüche 1 bis 2, wobei die Schmierlage (6) aus Kunstharz hergestellt ist.

4. Gleitlager nach einem der Ansprüche 1 bis 3, wobei ein Neigungswinkel jeder der Tragefläche (42), der Lastübertragungsfläche (27) und der Gleitoberfläche (63) bezüglich der radialen Richtung so eingerichtet ist, dass er in einen Bereich von 5 Grad bis 40 Grad fällt.

5. Gleitlager nach einem der Ansprüche 1 bis 4, wobei
das Gleitlager dazu eingerichtet ist, eine Last eines Fahrzeugkörpers, der einer strebenartigen Aufhängung unterzogen ist, zu halten, während Rotationsbewegung einer Strebenanordnung der strebenartigen Aufhängung erlaubt wird;
das obere Gehäuse (2), das untere Gehäuse (3), die Mittelplatte (4) und die Schmierlage (6) jeweils ein Einführungsloch (20, 30) zum Einführen der Strebenanordnung enthalten;
das obere Gehäuse dazu eingerichtet ist, an einem Anbringungsmechanismus zum Anbringen der Strebenanordnung am Fahrzeugkörper unter Einführung der Strebenanordnung in die Einführungslöcher befestigt zu werden; und
das untere Gehäuse dazu eingerichtet ist, an einem Federlager auf einer Oberseite einer Spulenfeder, die in die Strebenanordnung integriert ist, durch Einführen der Strebenanordnung in die Einführungslöcher befestigt zu werden.

## Revendications

1. Palier lisse pour supporter une charge d'un objet de support, le palier lisse comprenant :
un boîtier supérieur (2) configuré pour recevoir la charge de l'objet de support ;
un boîtier inférieur (3) combiné en rotation avec le boîtier supérieur ; et
une plaque centrale (4) placée entre le boîtier supérieur et le boîtier inférieur ;
la plaque centrale ayant une surface supérieure (41), sur laquelle une surface d'appui (42) est formée, et une surface inférieure (43), les deux desquelles sont sous une forme d'une surface sensiblement conique, la surface d'appui inclut une rainure (46) pour graisse pour fonctionner comme un réservoir de graisse ;
le boîtier supérieur ayant une surface (27) de transmission de charge sous une forme de surface sensiblement conique ; et
le boîtier inférieur ayant une surface (331) de support sous une forme d'une surface sensiblement conique, la surface de support étant en contact avec la surface inférieure de la plaque centrale ;
**caractérisé en ce que** le palier lisse comprend en outre
une feuille lubrifiante (6) placée entre la plaque centrale et le boîtier supérieur, et ayant une surface supérieure (60) et une surface inférieure (62), les deux desquelles sont sous une forme d'une surface sensiblement conique, une surface de glissement (63) formée sur la surface inférieure de la feuille lubrifiante étant en contact avec la surface d'appui de la plaque centrale,
la surface de transmission de charge étant en contact avec la surface supérieure de la feuille lubrifiante ;
le boîtier inférieur ayant en outre des crans (332) formés annulairement sur un côté circonférentiel extérieur de la surface d'appui, les crans ayant des sections plates (3321) et des sections en saillie (3320) faisant saillie depuis les sections plates vers le boîtier supérieur (2), les sections plates et les sections en saillie étant placées de façon alternée ;
la plaque centrale ayant en outre des crans convexes (45) se projetant radialement vers l'extérieur depuis une surface périphérique extérieure (47) de la plaque centrale ; et
les crans convexes de la plaque centrale étant configurés pour s'engager avec les sections en saillie des crans du boîtier inférieur pour empêcher la plaque centrale de tourner par rapport au boîtier inférieur.

2. Palier lisse selon la revendication 1, dans lequel la plaque centrale (4) est constituée d'un matériau élastique.

3. Palier lisse selon l'une quelconque des revendications 1-2, dans lequel la feuille lubrifiante (6) est constituée de résine synthétique.

4. Palier lisse selon l'une quelconque des revendications 1 à 3, dans lequel un angle d'inclinaison de chacune de la surface d'appui (42), de la surface (27) de transmission de charge, et de la surface de glissement (63), par rapport au sens radial, est fixé pour tomber à l'intérieur d'une plage de 5 degrés à 40 degrés.

5. Palier lisse selon l'une quelconque des revendications 1 à 4, dans lequel :
le palier lisse est configuré pour supporter une charge d'une carrosserie de véhicule appliquée à la suspension à jambe de force tout en permettant un mouvement de rotation d'un ensemble de jambe de force de la suspension à jambe de force ;
le boîtier supérieur (2), le boîtier inférieur (3), la plaque centrale (4), et la feuille lubrifiante (6) incluent chacun(e) un trou d'insertion (20, 30) pour insertion de l'ensemble de jambe de force ;
le boîtier supérieur est configuré pour être fixé à un mécanisme de montage pour monter l'ensemble de jambe de force sur la carrosserie de véhicule, avec l'ensemble de jambe de force inséré dans les trous d'insertion ; et
le boîtier inférieur est configuré pour être fixé à un siège de ressort au niveau d'un sommet d'un ressort hélicoïdal incorporé dans l'ensemble de jambe de force, avec l'ensemble de jambe de force inséré dans les trous d'insertion.
